# EUROPÄISCHE PATENTSCHRIFT

(11) **EP 2 236 207 B1**
(45) Veröffentlichungstag und Bekanntmachung des Hinweises auf die Patenterteilung: **13.01.2016**
(21) Anmeldenummer: 10002976.8
(22) Anmeldetag: 20.03.2010
(51) Int. Cl.: B01L 3/02

(54) **Dosiervorrichtung**
Metering device
Dispositif de dosage

(30) Priorität: 31.03.2009 DE 102009016590
(43) Veröffentlichungstag der Anmeldung: 06.10.2010
(73) Patentinhaber: EPPENDORF AG, 22339 Hamburg (DE)
(72) Erfinder: Reichmuth, Burkhardt, 22041 Hamburg (DE)
(74) Vertreter: Hauck Patentanwaltspartnerschaft mbB

(56) Entgegenhaltungen:
- EP-A1- 2 033 712
- EP-A2- 0 657 216
- WO-A1-2008/107147
- DE-A1- 19 830 636

## Beschreibung

Die Erfindung bezieht sich auf eine Dosiervorrichtung für den Gebrauch mit einer Spritze.

Dosiervorrichtungen dienen der Dosierung von Flüssigkeiten und werden insbesondere in biologischen, chemischen und medizinischen Labors eingesetzt. In der Ausführung als Dispenser ermöglichen sie die schrittweise Abgabe einer Flüssigkeit aus einer Spritze. Dabei kann die Dosiermenge pro Abgabeschritt einstellbar sein. Ein Dispenser mit Dosiermengeneinstellung ist aus der DE 29 26 691 C2 bekannt.

Weiter sind als Dosiervorrichtungen Pipetten bekannt, mit denen eine per Gerät definierte oder einstellbare Flüssigkeitsmenge aufgenommen und in einem Vorgang wieder abgegeben werden kann.

Für Dosiervorrichtungen werden vielfach Spritzen unterschiedlicher Größe angeboten. Diese haben zumeist unterschiedliche Querschnittsabmessungen. Bei Übergang auf eine andere Spritzengröße stimmt die eingestellte Dosiermenge nicht mehr mit der tatsächlichen Dosiermenge überein. Deshalb sind Dosiervorrichtungen bekannt geworden, bei denen die Spritze eine Codierung aufweist, die von einer Abtasteinrichtung der Pipette gelesen wird. Eine Auswerteeinrichtung kann die eingesetzte Spritzengröße ermitteln und die tatsächlich eingestellte Dosiermenge anzeigen.

Ein Pipettensystem der genannten Art ist aus der EP 0 657 216 A2 und der US 5,620,661 A bekannt. Bei diesem Pipettensystem hat die Pipette in einem Pipettengehäuse eine Aufnahme für einen Befestigungsabschnitt einer Spritze und in einem Aufnahmekörper eine Kolbenaufnahme für den Spritzenkolben der Spritze. Zudem sind Befestigungseinrichtungen zum reversiblen Fixieren von Befestigungsabschnitt und Spritzenkolben in ihren Aufnahmen und Kolbenstelleinrichtungen zum Verschieben des Aufnahmekörpers im Pipettengehäuse vorhanden. Die Spritze weist einen Informationsträger mit einer Information über die Spritze und/oder deren Zustand auf und die Pipette hat eine Abtasteinrichtung für die Information auf dem Informationsträger. Der Befestigungsabschnitt und der Spritzenkolben sind durch axiale Öffnungen ihrer Aufnahmen axial in ihre Befestigungspositionen in die Pipette schiebbar, wobei der Informationsträger in eine Abtastposition bezüglich der Abtasteinrichtung gelangt. Der Spritzenflansch weist einen ringförmigen Kranz mit mindestens einer axial gerichteten Abtastfläche mit einer axialen Position als Informationsträger auf, wobei die Spritze in verschiedenen Drehstellungen in die Pipette einsetzbar ist. Die Abtasteinrichtung ist ringförmig mit über den Umfang verteilten Sensoren ausgeführt. Die Sensoren haben von einer der Axialöffnungen zugewandten Stirnseite der Abtasteinrichtung vorstehende, elastisch zusammendrückbare Noppen. Bevorzugt ist eine Auswerteeinrichtung für die von der Abtasteinrichtung gelesene Information und eine Anzeigeeinrichtung für die eingestellte Dosiermenge vorhanden. Für eine reproduzierbare Ausrichtung der Spritze mit ihrem Informationsträger auf die Abtasteinrichtung sind Ausrichtnasen am Befestigungsabschnitt der Spritze und Führungsnuten in der Aufnahme für den Befestigungsabschnitt vorhanden. Bei einer praktischen Ausführung hat die Spritze mehrere über den Umfang des Befestigungsabschnittes gleichmäßig verteilte Ausrichtnasen, die an axial gerichteten Stegen auf einer seitlichen Begrenzung der Aufnahme geführt sind, um die Abtastflächen auf die Sensoren auszurichten. Die Ausrichtnasen sind oben jeweils beidseitig angeschrägt, um die Stege in die Nuten zwischen den Ausrichtnasen hineinzuführen, wenn diese nicht exakt auf die Stege ausgerichtet sind.

Das Pipettensystem ermöglicht einem Benutzer, den Spritzentyp den praktischen Anforderungen entsprechend einzusetzen und die Dosierungsmenge ohne aufwendige Umrechnungsarbeiten einzustellen. Die Information kann auch andere spezifische Daten der Spritze und/oder des Zustandes der Spritze betreffen, beispielsweise den Reinheitszustand oder eine Füllsubstanz der Spritze, die von der Pipette automatisch berücksichtigt werden.

Trotz der an sich drehfesten Befestigung der Spritze in der Aufnahme durch Führung der Ausrichtnasen in der Führungsnut bzw. an den axial gerichteten Stegen sind die Spritzen unter erhöhtem Krafteinsatz in der Aufnahme verdrehbar. Dies beruht darauf, dass die Spritzen aus einem Kunststoff wie Polypropylen hergestellt werden, sodass sich die Führungsnasen unter Belastung verformen und aus den Führungsnuten heraus- bzw. über die Stege hinweggedrückt werden können. Die Abtastflächen können beim Drehen der Spritze seitlich gegen die vorspringenden Noppen der Abtasteinrichtung treffen und diese mit den elektrischen Kontakten der Sensoren abscheren, sodass die Dosiervorrichtung unbrauchbar wird. Die Gefahr einer Zerstörung der Dosiervorrichtung ist besonders groß, wenn eine großvolumige Spritze, die einen Adapter mit einem Befestigungsabschnitt aufweist, der lösbar mit einem Spritzenzylinder verbunden ist, in der Aufnahme verdreht wird. Da diese Spritze einen verhältnismäßig großen Durchmesser hat, können verhältnismäßig hohe Drehmomente in die Befestigung der Spritze eingeleitet werden. Die Reparatur ist aufwendig und umfasst den Austausch der verhältnismäßig teuren Abtasteinrichtung.

Davon ausgehend liegt der Erfindung die Aufgabe zugrunde, eine vor einer Beschädigung durch Verdrehen einer Spritze geschützte Dosiervorrichtung zur Verfügung zu stellen.

Die Aufgabe wird durch eine Dosiervorrichtung mit den Merkmalen des Anspruchs 1 gelöst. Vorteilhafte Ausgestaltungen der Dosiervorrichtung sind in den Unteransprüchen angegeben.

Die erfindungsgemäße Dosiervorrichtung für den Gebrauch mit einer Spritze, die an einem Spritzenzylinder einen Befestigungsabschnitt mit mindestens einer von der Oberseite vorstehenden, axial gerichteten Abtastfläche und mindestens einer vom Außenumfang vorstehenden Ausrichtnase und einen Kolben mit einer Kolbenstange aufweist, hat
- eine Aufnahme für den Befestigungsabschnitt des Spritzenzylinders mit einer Axialöffnung zum axialen Einsetzen des Befestigungsabschnittes in eine Befestigungsposition,
- eine in der Aufnahme angeordnete Abtasteinrichtung mit mindestens einem von der der Axialöffnung zugewandten Basisfläche der Abtastvorrichtung vorstehenden Abtastmittel zum Abtasten der mindestens einen Abtastfläche eines in Befestigungsposition eingesetzten Befestigungsabschnittes,
- mindestens ein axiales Führungsmittel zum Ausrichten der mindestens einen Ausrichtnase in eine Winkelstellung bezüglich der Rotation um die Achse der Dosiervorrichtung, in der die Spritze mit mindestens einer Abtastfläche axial auf mindestens ein Abtastmittel ausgerichtet ist,
- einen Aufnahmekörper mit einer Kolbenaufnahme und einer weiteren Axialöffnung zum axialen Einschieben der Kolbenstange in eine Befestigungsposition,
- Befestigungseinrichtungen zum lösbaren Halten von Befestigungsabschnitt und Kolbenstange in ihren Befestigungspositionen in der Aufnahme und in der Kolbenaufnahme und
- Kolbenstelleinrichtungen zum Verschieben des Aufnahmekörpers,
dadurch gekennzeichnet, dass
- das axiale Führungsmittel in der Aufnahme unterhalb der Abtasteinrichtung vorhanden ist, wobei das Fuhrungsmittel an der der Axialöffnung zugewandten Seite eine Führungskontur hat,
- die mindestens eine Vertiefung zur Aufnahme mindestens einer Ausrichtnase bei Anordnung der Spritze mit Befestigungsabschnitt und Kolbenstange in ihren Befestigungspositionen aufweist und
- die mindestens eine der Vertiefung benachbarte Erhöhung mit einem größeren Abstand Δh von der Basisfläche der Abtasteinrichtung als die mindestens eine Vertiefung aufweist, wobei die Spritze durch Verdrehen in der Aufnahme mit der mindestens einen Ausrichtnase aus der mindestens einen Vertiefung heraus auf die mindestens eine Erhöhung verlagerbar ist.

Bei der erfindungsgemäßen Dosiervorrichtung wird eine Spritze beim Einsetzen durch das Zusammenwirken der Ausrichtnase mit dem axialen Führungsmittel in eine Winkelstellung durch Rotation um die Symmetrieachse des Zylinder-Kolben-Systems der in die Dosiervorrichtung eingesetzten Spritze, der Achse der Dosiervorrichtung, ausgerichtet, in der jede dazu vorgesehene Abtastfläche der Spritze axial auf ein Abtastmittel ausgerichtet ist. Hierbei gelangt die Spritze mit dem an ihrem Zylinder ausgebildeten Befestigungsabschnitt, der vorzugsweise ringförmig ausgebildet ist und sich bevorzugt am oberen Ende das Zylinders befindet, und der Kolbenstange in die Befestigungsposition in-der sie mittels der Befestigungseinrichtung in lösbarer Weise gehalten wird. Die Dosiervorrichtung kann mit ihrer Abtasteinrichtung die Abtastflächen abtasten und die in Anzahl und/oder Anordnung und/oder axiale Position der Abtastflächen enthaltene Information über die Spritze und/oder deren Zustand erfassen. Diese Information kann über mechanische und/oder elektrische und/oder optische Auswerteeinrichtungen und/oder Anzeigeeinrichtungen verarbeitet und/oder zur Anzeige gebracht werden. Unter großer Kraftaufwendung ist es möglich, eine Spritze aus Polypropylen oder einem anderen weichelastischen Kunststoff aus dieser Befestigungsposition ohne vorheriges Lösen der Befestigungseinrichtungen herauszudrehen, wobei jede Ausrichtnase unter Verformung an einem zugeordneten Führungsmittel vorbeigedrückt wird. Die Erfindung verhindert jedoch, dass mit dieser Verdrehung eine Beschädigung der vorzugsweise ringförmigen Abtasteinrichtung einhergeht. Dies wird durch das vorzugsweise ringförmige Führungsmittel erreicht, das die mindestens eine Ausrichtnase in mindestens einer Vertiefung aufnimmt, wenn die Spritze mit jeder dazu vorgesehenen Abtastfläche korrekt auf ein Abtastmittel ausgerichtet ist. Beim Verdrehen der Spritze gleitet die mindestens eine Abtastfläche aus der mindestens einen Vertiefung auf die mindestens eine Erhöhung, die einen größeren Abstand von der Abtasteinrichtung hat, sodass der Spritzenzylinder von der Abtasteinrichtung weg verlagert wird. Hierbei werden die Abtastflächen von der ringförmigen Abtasteinrichtung weg verlagert, sodass sie die davon vorstehenden Abtastmittel nicht beschädigen und die Abtastmittel nicht mehr betätigt werden. Bevorzugt wird beim Verdrehen der Befestigungsabschnitt so weit von der ringförmigen Abtasteinrichtung wegbewegt, dass die Abtastflächen die Abtastmittel gerade nicht mehr berühren. Damit trägt die Erfindung der Erkenntnis Rechnung, dass ein gewaltsames Verdrehen der Spritze aus ihrer Befestigungsposition in der Dosiervorrichtung aufgrund der für die Spritze zum Einsatz kommenden weichelastischen Kunststoffe nicht verhindert werden kann. Die erfindungsgemäße Dosiervorrichtung verhindert jedoch eine Beschädigung der teuren Abtasteinrichtung, indem sie Mittel aufweist, die eine Drehung der Spritze bezüglich der Dosiervorrichtung in ein Auseinanderrücken von Befestigungsabschnitt und Abtasteinrichtung umsetzen.

Gemäß einer Ausgestaltung weist das mindestens eine axiale Führungsmittel einen Führungssteg und/oder eine Führungsnut in axialer Richtung auf. Auch können parallele axiale Führungsstege eine Führungsnut begrenzen.

Die Information über die Spritze und/oder deren Zustand kann in der Anzahl und/oder Anordnung und/oder axialen Position von einer oder mehreren Abtastflächen am Befestigungsabschnitt der Spritze enthalten sein. Bevorzugt sind die Abtastflächen, die die Spritze kennzeichnen, alle in einem einzigen definierten Abstand von der Oberseite des Befestigungsabschnitts angeordnet, sodass durch Anordnen oder Weglassen von Abtastflächen an einer bestimmten Umfangsposition des Befestigungsabschnittes eine binäre Darstellung der Information erreicht werden kann, die Abtastfehler weitgehend ausschließt.

Die Erfindung bezieht Ausgestaltungen ein, bei denen die ringförmige Abtasteinrichtung nur ein einziges Abtastmittel aufweist. Gemäß einer bevorzugten Ausgestaltung sind über den Umfang der ringförmigen Abtasteinrichtung mehrere Abtastmittel verteilt. Hierdurch können Informationen von einer Spritze mit mehreren, am Umfang verteilten Abtastflächen gelesen werden.

In einer weiteren Ausführungsform können die erfindungsgemäßen Dosiervorrichtungen auch Spritzen aufnehmen, die als Abtastfläche eine ebene Fläche senkrecht zur Achse der Spritze und damit der Dosiervorrichtung aufweisen, wobei diese Fläche örtliche Vertiefungen aufweisen, die den jeweiligen Spritzentyp kennzeichnen. Um diese Codierung zu lesen, sind die in der Abtasteinrichtung vorgesehenen Abtastmittel gegenüber diesen Vertiefungen zu positionieren. Dies wird durch das Führungsmittel erreicht, wenn die mindestens eine Ausrichtnase der Spritze in der Vertiefung eines Führungsmittels aufgenommen wird. Die Abtastmittel sind nun so ausgelegt und das Führungsmittel so in seinen Abmessungen dimensioniert, dass die Abtastmittel nur betätigt werden, wenn die Ausrichtnasen in den Vertiefungen des Führungsmittels liegen und die dem Abtastmittel gegenüberliegende Abtastfläche keine örtliche Vertiefung aufweist. Die Abtastmittel werden also nur dort ausgelöst, wo ihnen die ebene Abtastfläche gegenüber liegt. Diese Codierung kann aber nur durch die Abtastmittel wahrgenommen werden, wenn die Abtastfläche durch das Einsetzen des Ausrichtnasen in das Führungsmittel der Abtasteinrichtung mit ihrem Abtastmitteln genügend angenähert wird. Befinden sich die Ausrichtnasen der Spritze noch nicht in der Vertiefung, so ist eine Berührung der Abtastmittel durch die Spritze ausgeschlossen. Die Abtastmittel können dann weder betätigt werden, noch durch eine Drehbewegung der Spritze beschädigt werden.

In einer anderen Ausführungsform können die erfindungsgemäßen Dosiervorrichtungen auch Spritzen aufnehmen, die als Abtastfläche eine ebene Fläche senkrecht zur Achse der Spritze und damit der Dosiervorrichtung aufweisen, wobei diese Fläche örtliche Erhöhungen aufweisen, die den jeweiligen Spritzentyp kennzeichnen. Um diese Codierung zu lesen, sind die in der Abtasteinrichtung vorgesehenen Abtastmittel gegenüber diesen Erhöhungen zu positionieren. Dies wird durch das Führungsmittel erreicht, wenn die mindestens eine Ausrichtnase der Spritze in der Vertiefung eines Führungsmittels aufgenommen wird. Die Abtastmittel sind nun so ausgelegt und das Führungsmittel so in seinen Abmessungen dimensioniert, dass die Abtastmittel nur betätigt werden, wenn die Ausrichtnasen in den Vertiefungen des Führungsmittels liegen und die dem Abtastmittel gegenüberliegende Abtastfläche eine örtliche Erhöhung aufweist. Die Abtastmittel werden also nur dort ausgelöst, wo ihnen eine Erhöhung der snsonsten ebenen Abtastfläche gegenüber liegt. Diese Codierung kann aber nur durch die Abtastmittel wahrgenommen werden, wenn die Abtastfläche durch das Einsetzen des Ausrichtnasen in das Führungsmittel der Abtasteinrichtung mit ihrem Abtastmitteln genügend angenähert wird. Befinden sich die Ausrichtnasen der Spritze noch nicht in der Vertiefung, so ist eine Berührung der Abtastmittel durch die Spritze ausgeschlossen. Die Abtastmittel können dann weder betätigt werden, noch durch eine Drehbewegung der Spritze beschädigt werden.

Grundsätzlich kann die vorzugsweise ringförmige Abtasteinrichtung starr bezüglich der Aufnahme angeordnet sein. Gemäß einer bevorzugten Ausgestaltung ist sie über mindestens ein axial entgegen der Einschieberichtung des Befestigungsabschnittes wirksames Federmittel in der Aufnahme abgestützt. Das Federmittel federt ein, wenn eine Spritze eingesetzt ist. Hierdurch werden Toleranzen ausgeglichen und Beschädigungen der Abtasteinrichtung vermieden.

Damit Befestigungsabschnitt und Abtasteinrichtung beim Drehen der Spritze voneinander entfernt werden können, können federnde Haltemittel für den Befestigungsabschnitt vorhanden sein. Beispielsweise können die Befestigungseinrichtungen federnd ausgeführt sein. Ferner ist es möglich, den Befestigungsabschnitt an Stellen, die von den Befestigungseinrichtungen gehalten werden, federnd auszuführen. Gemäß einer bevorzugten Ausgestaltung ist das vorzugsweise ringförmige Führungsmittel mit der Abtasteinrichtung verbunden und über das mindestens eine Federmittel in der Aufnahme abgestützt. Bei dieser Ausgestaltung hat ein Verdrehen der in der Pipette lösbar gehaltenen Spritze eine Bewegung der ringförmigen Führungsmittel unter Mitnahme der vorzugsweise ringförmigen Abtasteinrichtung zur Folge, wobei das mindestens eine Federmittel einfedert. Infolgedessen weicht die Abtasteinrichtung den Abtastflächen der Spritze aus und wird nicht beschädigt.

Die Verfederung von Abtasteinrichtungen und ggfs. Führungsmittel erleichtert das selbsttätige Trennen von Pipette und Spritze nach Lösen der Befestigungseinrichtungen.

Die Befestigungseinrichtungen können verschieden ausgeführt sein. Gemäß einer bevorzugten Ausgestaltung sind die Befestigungseinrichtungen radial zustellbare Greifeinrichtungen zum Fixieren des Befestigungsabschnittes und der Kolbenstange in den Befestigungspositionen.

Die Erfindung bezieht Ausgestaltungen mit nur einer einzigen Vertiefung des ringförmigen Führungsmittels ein. Gemäß einer bevorzugten Ausgestaltung ist das Führungsmittel ringförmig und weist mehrere über den Umfang verteilte Vertiefungen und dazwischen angeordnete Erhöhungen auf. Hierdurch wird das Einsetzen der Spritze in die Pipette erleichtert. Bevorzugt entspricht die Anzahl der Vertiefungen der Anzahl der Abtastmittel. Wenn überdies die Anzahl der Abtastflächen der Anzahl der Abtastmittel entspricht, ist sichergestellt, dass in jeder Absetzposition der Spritze sämtliche Abtastflächen von Abtastmitteln abgetastet werden.

Ein allmähliches Entfernen des Befestigungsabschnittes von der Abtasteinrichtung beim Drehen der Spritze in der Pipette kann insbesondere durch eine geeignete Kontur der Ausrichtnase sichergestellt werden. Hierfür kann die Ausrichtnase oben an beiden Seiten gerundet oder angeschrägt sein. Gemäß einer bevorzugten Ausgestaltung steigt die Führungskontur zwischen den Vertiefungen und den Erhöhungen allmählich an. Dies begünstigt insbesondere im Zusammenwirken mit gerundeten oder angeschrägten Seiten der mindestens einen Ausrichtnase ein sanftes Gleiten der Ausrichtnasen über die Führungskontur beim Drehen der Spritze. Gemäß einer weiteren Ausgestaltung sind die Übergänge zwischen den Vertiefungen und Erhöhungen rampenförmig und/oder gerundet.

Gemäß einer bevorzugten Ausgestaltung weisen sämtliche Vertiefungen dasselbe Niveau bezüglich der ringförmigen Abtasteinrichtung und/oder sämtliche Erhöhungen dasselbe Niveau bezüglich der ringförmigen Abtasteinrichtung auf.

Gemäß einer weiteren Ausgestaltung sind die Kolbenstelleinrichtungen manuell und/oder motorgetrieben. Eine manuelle Kolbenstelleinrichtung ist in der DE 29 26 691 C2 und der US 4,406,170 A beschrieben. Die diesbezüglichen Ausführungen sind durch Bezugnahme in die vorliegende Anmeldung einbezogen.

Gemäß einer weiteren Ausgestaltung weist die Dosiervorrichtung eine mit der Abtasteinrichtung verbundene Auswerteeinrichtung und/oder eine Anzeigeeinrichtung für die von der Abtasteinrichtung gelesene Information auf. Die Auswerteeinrichtung kann die gelesene Information insbesondere unter Berücksichtigung einer Dosiermengeneinstellung einer Kolbenstelleinrichtung bearbeiten und die jeweilige Dosierungsmenge bzw. das jeweilige Dispensiervolumen auf der Anzeigeeinrichtung zur Anzeige bringen.

Die Dosiervorrichtung kann grundsätzlich an einem Rahmen oder einer anderen tragenden Struktur ausgebildet sein. Gemäß einer bevorzugten Ausgestaltung weist die Dosiervorrichtung ein Gehäuse auf, das die folgenden Bestandteile ganz oder teilweise umfasst: Die Aufnahme, die Abtasteinrichtung, das axiale Führungsmittel, den Aufnahmekörper, die Befestigungseinrichtungen, die Kolbenstelleinrichtungen, das Führungsmittel, die Auswerteeinrichtung und die Anzeigeeinrichtung.

Gemäß einer Ausgestaltung ist die Dosiervorrichtung so ausgestaltet, dass sie beim Dosieren mit der Hand gehalten werden kann. Gemäß einer weiteren Ausgestaltung ist die Dosiervorrichtung eine stationäre Dosiervorrichtung. Auch ist es möglich, die Dosiervorrichtung so auszugestalten, sodass sie wahlweise mit der Hand gehalten oder als stationäre Vorrichtung betrieben werden kann. Ferner kann die Dosiervorrichtung so ausgestaltet sein, dass sie von Hand und/oder automatisch betätigbar ist, d. h. die Dosiervorgänge von Hand und/oder automatisch steuerbar sind. Bei der erfindungsgemäßen Dosiervorrichtung kann es sich sowohl um einen Dispenser als auch um eine Pipette handeln.

Die erfindungsgemäße Dosiervorrichtung kann mit Spritzen gebraucht werden, deren Spritzenzylinder einteilig mit einem Befestigungsabschnitt verbunden ist. Sie bezieht sich auch auf Spritzen, bei denen der Befestigungsabschnitt an einem Adapter ausgebildet ist, der lösbar mit dem Spritzenzylinder verbunden ist, beispielsweise über eine Bajonettverbindung, eine Schraubverbindung oder eine Klemmverbindung. Adapter kommen insbesondere bei großvolumigen Spritzen zum Einsatz. Hierbei kann es sich insbesondere um Spritzen mit einem Fassungsvermögen von 25 ml oder 50 ml handeln.

Die Dosiervorrichtung kann weitere Merkmale der Pipette des Pipettensystems gemäß EP 0 657 216 A zu der US 5,620,661 A aufweisen. Dies gilt insbesondere für die Ausgestaltung der Aufnahme, der Abtasteinrichtung, der axialen Führungsmittel, des Aufnahmekörpers und der Befestigungseinrichtungen gemäß den vorbezeichneten Druckschriften. Die Dosiervorrichtung kann insbesondere mit Spritzen zusammenarbeiten, die in den beiden vorerwähnten Druckschriften beschrieben sind. Die diesbezüglichen Angaben in der EP 0 657 216 A2 und der US 5,620,661 A sind durch Bezugnahme in die vorliegende Anmeldung einbezogen.

In einer bevorzugten Ausführungsform der Erfindung ist das Führungsmittel der Dosiervorrichtung ringförmig und weist dabei einen äußeren Ring mit einem Innendurchmesser D_{I} auf. Auf diesem Ring befindet sich befindet sich auf der der Axialöffnung der Dosiervorrichtung zugewandten Seite die Führungskontur des Führungsmittels mit seinen Vertiefungen und Erhöhungen. Die Abtastfläche der Spritze und die Abtastmittel der Abtasteinrichtung sind innerhalb des äußeren Rings des Führungsmittels angeordnet.

Bevorzugt weist das Führungsmittel der erfindungsgemäßen Dosiervorrichtung auch Anlageelemente auf, die flächig an einer Basisfläche der Abtasteinrichtung anliegen. Die Basisfläche zeichnet sich dadurch aus, dass von ihr die Abtastmittel der Abtasteinrichtung vorstehen. Bevorzugt ist dabei die Basisfläche eben und steht besonders bevorzugt senkrecht zur Symmetrieachse des Zylinder-Kolben-Systems der Dosiervorrichtung. Bevorzugt sind dabei die Führungsmittel ringförmig ausgebildet. Bei einem Führungsmittel mit einem äußeren Ring, auf dem sich die Führungskontur des Führungsmittels befindet, werden die Anlageelemente bevorzugt innerhalb des äußeren Ringes mit Innenradius D_{I} angeordnet.

Bevorzugt die die erfindsgemäße Dosiervorrichtung so ansgestaltet, dass ihre Befestigungseinrichtungen eine Spritze nur dann aufnehmen können, wenn die mindestens eine Ausrichtnase der Spritze in der mindestens einen Vertiefung des Führungsmittel aufgenommen ist. Damit eine Spritze von den Befestigungseinrichtungen aufgenommen wird, muss sie insbesondere so in die Spritze eingesetzt werden, dass das mindestens eine die Abtasteinrichtung abstützende Federmittel zusammengedrückt wird. Bevorzugt ist die Führungskontur des Führungsmittels der Dosiervorrichtung dabei so ausgestaltet, dass dabei die mindestens eine Ausrichtnase der Spritze dabei zwangsläufig in die zugehörige Vertiefung des Führungsmittels bewegt wird.

Die Erfindung wird nachfolgend anhand der anliegenden Zeichnungen näher erläutert, die eine bevorzugte Ausgestaltung einer ringförmigen Abtasteinrichtung, eines ringförmigen Führungsmittels und eines Adapters zeigen. In den Zeichnungen zeigen:
- Fig. 1: schematische Darstellung der wesentlichen Elemente einer Dosiervorrichtung gemäß Stand der Technik mit davon getrennter Spritze in einem Längsschnitt,
- Fig. 2: einen Adapter in einer vergrößerten Perspektivansicht schräg von oben und von der Seite,
- Fig. 3: Spritze in Seitenansicht
- Fig. 4: deataillierte Darstellung des Befestigungsabschnitts der Spritze gemäß Figur 3
- Fig. 5: Anordnung mit einer ringförmigen Abtasteinrichtung und einem ringförmigen Führungsmittel an einer Montageplatte in einer Perspektivansicht schräg von oben und von der Seite,
- Fig. 6: Explosionsdarstellung der einzelnen Bestandteile der Anordnung gemäß Figur 5
- Fig. 7: Detailldarstellung eines in Figur 5 gezeigten Bereichs, insbesondere des Führungsmittels der Dosiervorrichtung
- Fig. 8: Adapter in korrekter Befestigungsposition mittels Greifeinrichtungen an der Anordnung von Figur 3 gehalten in einer Seitenansicht,
- Fig. 9: Befestigungsabschnitt des Adapters in derselben Position an der ringförmigen Abtasteinrichtung unter Weglassung des ringförmigen Führungsmittels und Greifeinrichtungen in einer vergrößerten perspektivischen Teilansicht,
- Fig. 10: Adapter in mittels Greifeinrichtungen in verdrehter Stellung gehalten an einer Anordnung von Figur 3 in einer Seitenansicht,
- Fig. 11: Befestigungsabschnitt des Adapters in derselben Position an der ringförmigen Abtasteinrichtung unter Weglassung des ringförmigen Führungsmittels und Greifeinrichtungen in einer vergrößerten perspektivischen Teilansicht.

In der vorliegenden Anmeldung beziehen sich die Angaben "oben" und "unten" sowie "Oberseite" und "Unterseite" auf die bevorzugte Ausrichtung der Dosiervorrichtung im Betrieb, in der die Dosiervorrichtung senkrecht ausgerichtet und eine mit der Dosiervorrichtung verbundene Spritze unterhalb der Dosiervorrichtung angeordnet ist.

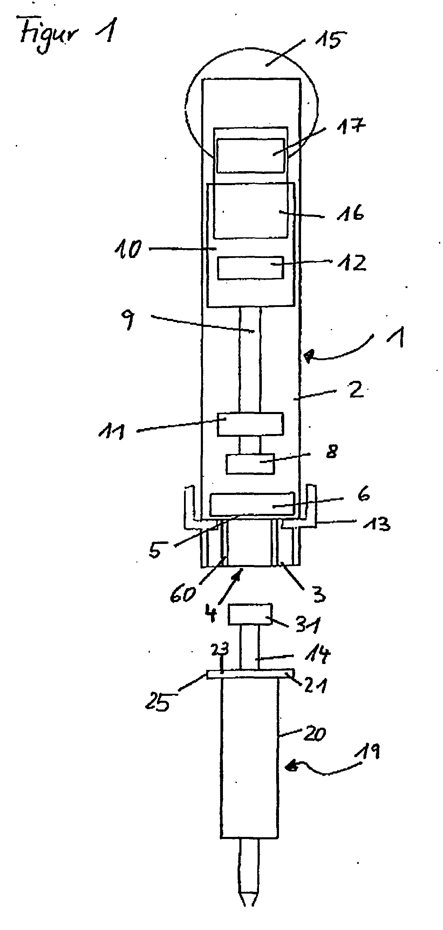

Gemäß Figur 1 umfasst eine per Hand betätigte Dosiervorrichtung 1 gemäß stand der Technik ein Gehäuse 2, das unten eine Aufnahme 3 hat, die durch eine Axialöffnung 4 am unteren Ende von außen zugänglich ist.

Die Aufnahme 3 hat einen etwa kreisrunden Querschnitt.

Am Boden 5 der Aufnahme 3 ist eine ringförmige Abtasteinrichtung 6 angeordnet.

Auf den die Aufnahme 3 seitlich begrenzenden Seitenwänden sind seitliche Führungsmittel 60 in Form von axial verlaufenden Rippen vorhanden. Im Beispiel sind drei Rippen über den Umfang der Aufnahme 3 verteilt.

Oberhalb der Aufnahme 3 ist im Gehäuse 2 der Dosiervorrichtung ein Aufnahmekörper 8 vorhanden. Dieser ist am oberen Ende mit einer Antriebsstange 9 von Kolbenstelleinrichtungen 10 zum axialen Verschieben des Aufnahmekörpers 8 im Pipettengehäuse 2 verbunden. Die Kolbenstelleinrichtungen 10 weisen einen Aufziehhebel 11 zum Aufzichen von Flüssigkeit für eine mit der Pipette 1 zu verbindende Spritze auf. Ferner haben sie einen Dosierhebel 12 zum Abgehen von Flüssigkeit aus einer Spritze.

Der Aufnahme 3 und dem Aufnahmekörper 8 sind Befestigungseinrichtungen 13 in Form von radial zustellbaren Greifeinrichtungen für einen Spritzenzylinder und für einen Kolben 14 (die Greifeinrichtungen für den Kolben sind nicht gezeigt) zugeordnet. Die Befestigungseinrichtungen 13 sind als schwenkbar gelagerte Greifhebel ausgeführt, die beim Lösen einer Spritze von der Dosiervorrichtung 1 zusammenwirken.

Oben am Gehäuse der Dosiervorrichtung 2 ist eine Einstelleinrichtung 15 für eine Dosierschrittweite in Form eines Einstellrädchens vorhanden, die mit den Kolbenstelleinrichtungen 10 verbunden ist. Ferner befindet sich oben im Gehäuse der Dosiervorrichtung 2 eine Auswerteeinrichtung 16, die mit der Abtasteinrichtung 6 und der Einstelleinrichtung 15 verbunden ist, um anhand der mittels der Abtasteinrichtung 6 ermittelten Codierung einer eingesetzten Spritze und der mittels der Einstelleinrichtung 15 vorgegebenen Dosierschrittweite das jeweilige Dosier- bzw. Dispensiervolumen zu ermitteln. Die Auswerteeinrichtung 16 ist mit einer oben am Pipettengehäuse 2 angeordneten Anzeigeeinrichtung 17 in Form eines LCD-Displays verbunden, welches das jeweils eingestellte Dispensiervolumen zur Anzeige bringt. Ferner enthält das Gehäuse der Dosiervorrichtung 2 eine Energieversorgung in Form einer Batterie oder eines Akkumulators.

Ein Beispiel für eine Pipette 1 mit den vorbeschriebenen Merkmalen ist in der EP 0 657 216 A2 und der US 5,620,661 A beschrieben. Die diesbezüglichen Angaben in der Figurenbeschreibung der vorbezeichneten Dokumente sind in die vorliegende Anmeldung einbezogen.

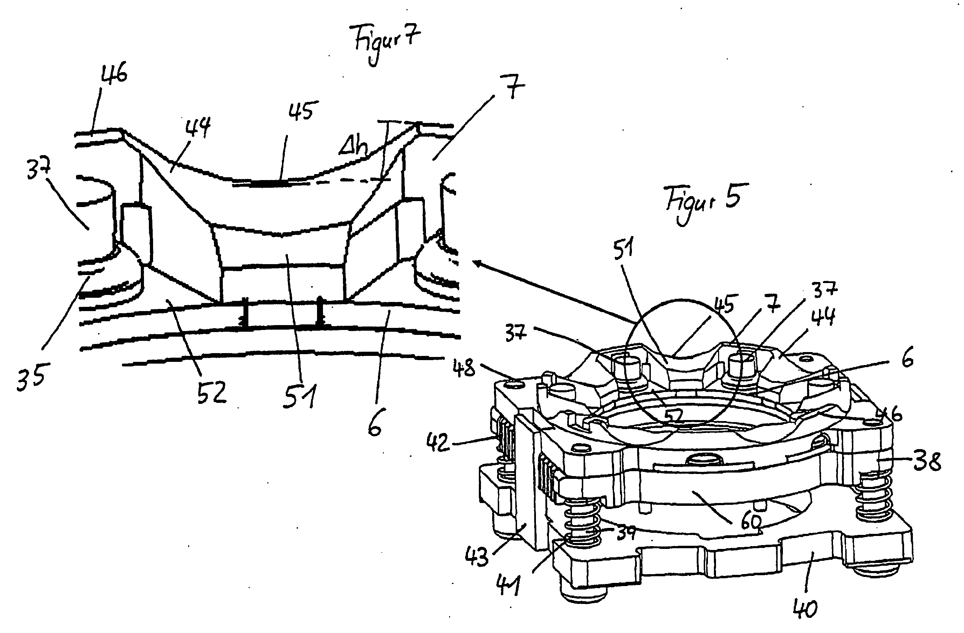

Die erfindungsgemäße Dosiervorrichtung 1 weist zudem am Boden 5 der Aufnahme 3 ein die ringförmige Abtasteinrichtung 6 konzentrisch umgebendes, ringförmiges Führungsmittel 7 auf, dessen. Einzelheiten und seiner Funktion sind anhand der Figur 5 bis 11 beschrieben wird.

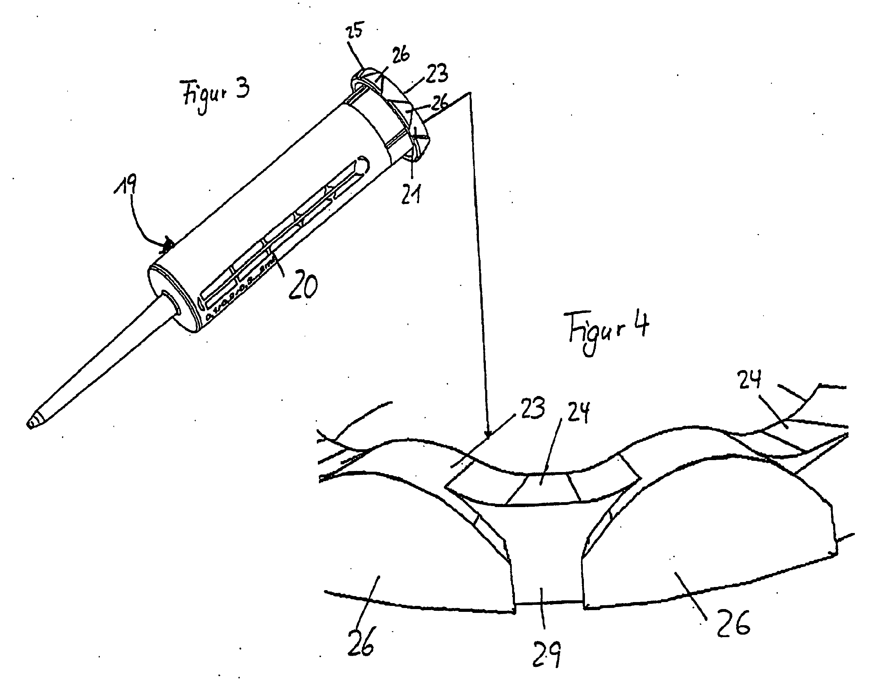

Eine mit der Dosiervorrichtung 1 zu verbindende Spritze 19 hat einen Spritzenzylinder 20, vergrößert in Figur 3 gezeigt, mit einem ringförmigen Befestigungsabschnitt 21 in Form eines Flansches. Der Befestigungsabschnitt 21 ist so bemessen, dass er durch die Axialöffnung 4 in die Aufnahme 3 hineinpasst. Auf einer Oberseite des Befestigungsabschnittes 21 sind axial vorstehende Abtastflächen 23 vorhanden. Die Abtastflächen 23 weisen Vertiefungen 24 auf der Oberseite auf. Anzahl und Anordnung der Vertiefungen 24 codieren für eine Spritze 19 mit einem bestimmten Volumen. Detailliert ist dies in Figur 4 dargestellt.

Am Umfang 25 des Befestigungsabschnittes 21 sind mehrere Ausrichtnasen 26 vorhanden. Die Ausrichtnasen 26 sind gleichmäßig über den Umfang 25 verteilt. Sie sind durch Vorsprünge auf dem Umfang 25 gebildet. Die beiden Seitenflachen jeder Ausrichtnase 26 konvergieren nach oben. Im Beispiel sind sie gerundet. Zwischen benachbarten Ausrichtnasen 26 ist ein Spalt 29 vorhanden, der ein axiales Führungsmittel aufnehmen kann.

Im Spritzenzylinder 20 ist der Kolben 14 angeordnet, der einteilig mit einer Kolbenstange 31 verbunden ist, die aus dem Spritzenzylinder 20 herausragt.

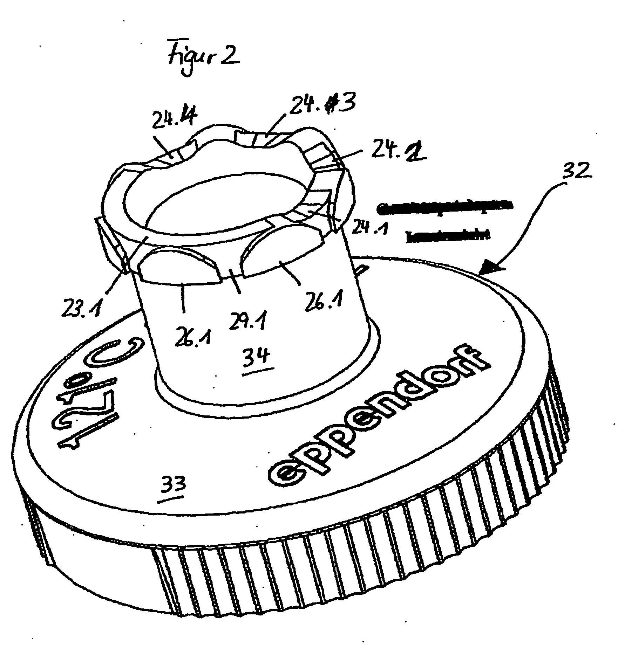

Ferner sind mit der Dosiervorrichtung 1 große Spritzen verbindbar, deren Spritzenzylinder einen Querschnitt hat, der den Querschnitt der Aufnahme 3 übersteigt. Diese Spritzenzylinder sind oben über eine Klemm-, Bajonett- oder Schraubverbindung mit einem Adapter 32 verbunden, der auch in Figur 2 gezeigt ist. Der Adapter 32 weist einen kappenartigen Verbindungsabschnitt 33 auf, der oben ein Rohrstück 34 trägt, das dem oberen Endbereich eines Spritzenzylinders 20 entspricht. Das Rohrstück 34 weist einen ringförmigen Befestigungsabschnitt 21.1 mit einer Abtastfläche 23.1, die Vertiefungen 24.1 bis 24.4 aufweist, die die vom Adapter aufgenommene große Spritze codieren. Ferner sind am Umfang des Befestigungsabschnittes 21.1 Ausrichtnasen 26.1 mit Spalten 29.1 dazwischen vorhanden. Der Adapter 32 ist mit seinem Befestigungsabschnitt 21.1 in die Aufnahme 3 einsetzbar.

Beispiele für Spritzen der vorbeschriebenen Art sind in der EP 0 657 216 A2 und der US 5,620,661 A beschrieben. Die diesbezüglichen Ausführungen in den vorbezeichneten Dokumenten sind durch Bezugnahme in die vorliegende Anmeldung einbezogen.

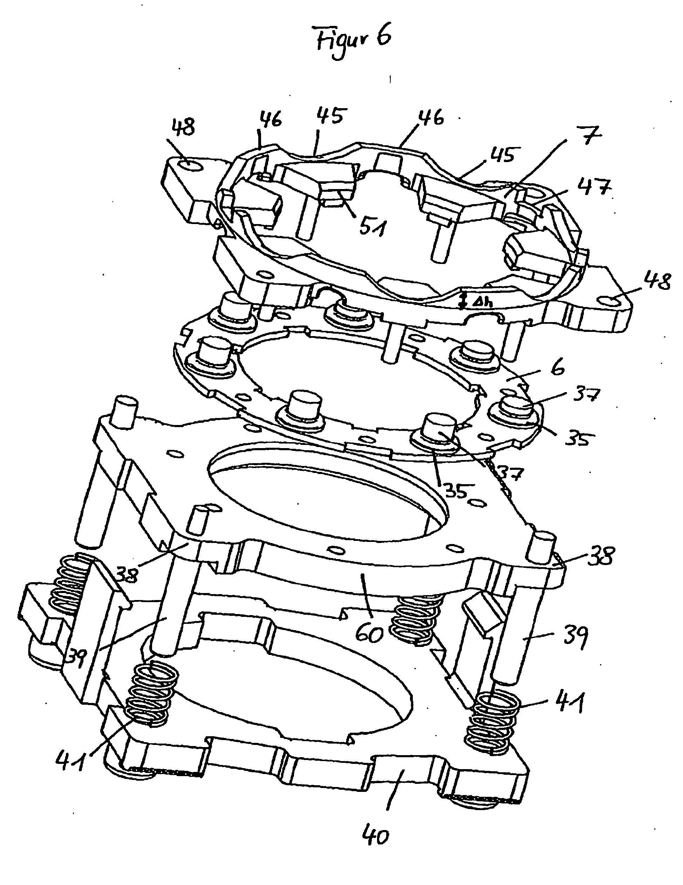

In den Figuren 5 und 6 sind eine ringförmige Abtasteinrichtung 6 und ein dazugehöriges ringförmiges Führungsmittel 7 gezeigt, die auf einer Montageplatte 60 angeordnet sind, die in der Aufnahme 3 einer erfindungsgemäßen Dosiervorrichtung positioniert ist. Während Figur 5 diese Baugruppe wie in der Dosiervorrichtung angeordnet zeigt, sind in der Explosionsdarstellung der Figur 6 die Elemente der Baugruppe zur besseren Veranschaulichung einzeln dargestellt. Gemäß den Figuren 5 und 6 weist die ringförmige Abtasteinrichtung 6 gleichmäßig über den Umfang verteilte Sensoren 35 auf. Diese haben von einer Basisfläche 52 der kreisringscheibenförmigen Abtasteinrichtung 6 vorstehende Abtastmittel 37 in Form von Tastknöpfen. Die Abtastmittel 37 sind als Noppen einer Ringscheibe aus Silikon ausgeführt, die auf einer ringförmigen Leiterplatte mit Leiterbahnen an der der Ringscheibe zugewandten Seite sitzen. Die Noppen haben einen Hohlraum, der zur Seite der Leiterbahnen hin geöffnet ist. Im Boden des Hohlraumes tragen die Noppen ein elektrisches Leitmaterial in Form einer Leitpille oder eines Leitlackes. Wenn ein Noppen axial zusammengedrückt wird, kontaktiert das Leitmaterial zwei Leiterbahnen und verbindet diese elektrisch miteinander. Hierdurch wird ein Schaltkreis geschlossen. Nach Entlastung federt der Noppen elastisch eine unbelastete Ausgangsform zurück.

Eine Ausgestaltung dieser Abtasteinrichtung 6 ist in der EP 0 657 216 A2 und der US 5,620,661 A beschrieben. Die diesbezüglichen Angaben sind durch Bezugnahme in die vorliegende Anmeldung einbezogen.

Die Montageplatte 60 weist an seitlich vorstehenden Randbereichen 38 vier Bohrungen auf, die auf Stehbolzen 39 geführt sind, die von einer Halteplatte 40 vorstehen. Zwischen der Halteplatte 40 und der Montageplatte 60 sind auf den Stehbolzen 39 Federmittel 41 in Form von Schraubenfedern geführt.

Die Abtasteinrichtung 6 hat am Rand eine Kontaktleiste 42, die mit den Sensoren verbunden ist. Die Kontaktleiste 42 ist mit einem Flachkabel verbunden, das zur Auswerteeinrichtung 16 geführt ist.

Das ringförmige Führungsmittel 7 weist eine Führungskontur 44 mit Vertiefungen 45 und Erhöhungen 46 auf, detailliert gezeigt in Figur 7, die den in Figur 5 im Kreis gezeigten Ausschnitt in Vergrößerung zeigt. Die Erhöhungen 46 haben jeweils dieselbe Winkellage wie die Abtastmittel 37. Die Vertiefungen 45 befinden sich auf halbem Winkel zwischen jeweils zwei benachbarten Abtastmitteln. Drei Erhöhungen 46 sind am oberen Rand mit Aussparungen 47 versehen, in die die oberen Enden der seitlichen Führungsmittel der Dosiervorrichtung eingreifen können.

Die Vertiefungen 45 sind ausgerundet, sodass sie allmählich bis zu den Erhöhungen 46 ansteigen. Die Vertiefungen 45 haben eine komplementäre Form zu den Oberseiten der Ausrichtnasen 26, 26.1. Die Erhöhungen 46 sind abgeflacht.

Die Vertiefungen 45 haben dasselbe Niveau bezüglich der Basisfläche 52 der Abtasteinrichtung 6. Die Erhöhungen 46 sind weiter von der Basisfläche 52 entfernt. Sie haben denselben Abstand von der Basisfläche 52. Der Unterschied der Abstands der Erhöhung 46 von dem Abstand der Vertiefung 25 von der Basisfläche Δh beträgt vorzugsweise 0,5 bis 2 mm, besonders bevorzugt 1 bis 1,5 mm.

Das ringförmige Führungsmittel 7 ist ebenfalls an Bohrungen in seitlich vorstehenden Randbereichen 48 auf den Stehbolzen 39 geführt. Das Führungsmittel 7 hat innen neben den Vertiefungen 45 Anlageelement 51 in Form von konsolenformige Vorsprünge, die auf der Basisfläche 52 der Abtasteinrichtung 6 aufliegen.

Das Führungsmittel 7 und die Abtasteinrichtung 6 sind starr miteinander verbunden.

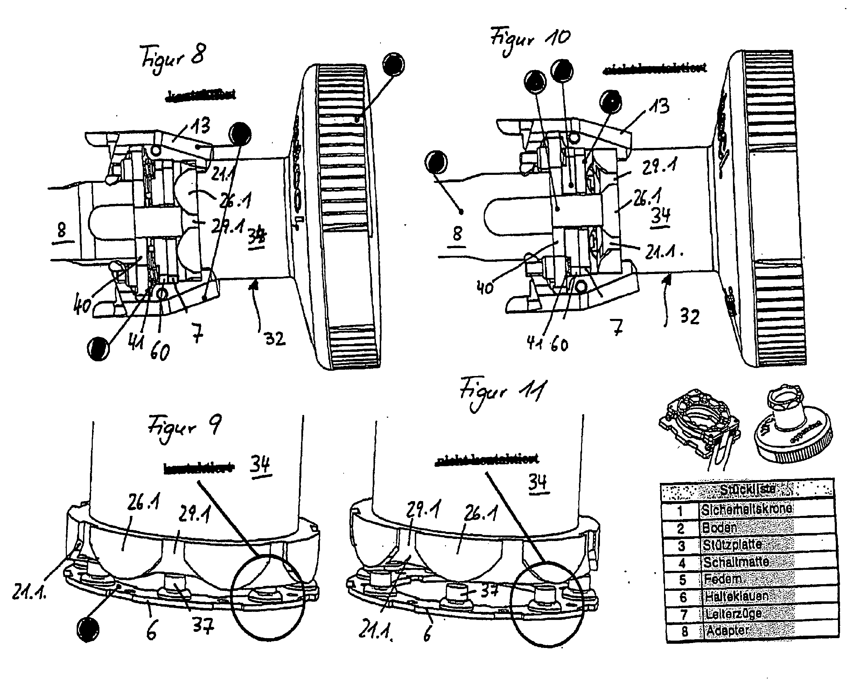

Gemäß Figur 8 und 9 (Führungsmittel 7 zur besseren Darstellung weggelassen) ist in die Aufnahme 3 eingesetzte Adapter 32 mittels der Greifeinrichtungen 13 in der Pipette 1 fixiert. Die seitlichen Führungsmittel greifen in die Aussparungen 47 zwischen den Ausrichtnasen 26.1 ein. Die Ausrichtnasen 26.1 sind in den Vertiefungen des ringförmigen Führungsmittels 7 angeordnet. Die Federmittel 41 sind ein wenig eingefedert.

Die Abtastflächen 23 liegen an den zugeordneten Abtastmitteln 37 an und drücken diese zusammen, sodass diese kontaktieren.

Gemäß Fig. 10 und 11 (Führungsmittel 7 zur besseren Darstellung weggelassen) ist der Adapter 32 in der Aufnahme 3 verdreht, sodass die seitlichen Führungsmittel nicht mehr in die Aussparungen 47 eingreifen. Außerdem sitzen die Ausrichtnasen 26.1 auf den Erhöhungen 46 des ringförmigen Führungsmittels 7. Da der Adapter 32 mittels der Greifeinrichtungen 13 in der Aufnahme 3 gehalten werden soll, drücken die Ausrichtnasen 26.1 die Anordnung aus ringförmigem Führungsmittel und Abtasteinrichtung 6 nach oben, sodass die Federmittel 41 weiter einfedern. Um der dabei auftretenden sehr großen Kraft zu entgehen, wird der Nutzer der Dosiervorrichtung aufgrund der Kontur der Ausrichtnasen 26, 26.1 und des Führungsmittels 7 die Spritze beim Einsetzen drehen. Beim Drehen des Adapters 32 in der Aufnahme 3 wird die Abtasteinrichtung 6 von den Abtastflächen 23 des Adapters 32 dabei in einem Abstand bewegt, sodass die Abtastflächen 32 die Abtastmittel 37 nicht abscheren. Durch das Drehen gelangen die Ausrichtnasen 26, 26.1 dann zwangsläufig in die Vertiefungen 25 des Führungsmittels, so dass die richtigen Bereiche der Abtastfläche 23 wieder den Abtastmitteln 37 gegenüber liegen, so dass diese die Codierung der Spritzen 19 oder Spritzenadapter 19.1 erfassen können.

Die Abtasteinrichtung 6 wird folglich nicht beschädigt. Lediglich die Abtastung wird infolge des Verdrehens des Adapters 32 aus der richtigen Position außer Funktion gesetzt.

## Patentansprüche

1. Dosiervorrichtung für den Gebrauch mit einer Spritze (19), die an einem Spritzenzylinder (20) einen Befestigungsabschnitt (21) mit mindestens einer von der Oberseite vorstehenden axial gerichteten Abtastfläche (23) und mindestens einer vom Außenumfang des Befestigungsabschnitts (21) vorstehenden Ausrichtnase und einen Kolben mit einer Kolbenstange aufweist, mit
• einer Aufnahme (3) für den Befestigungsabschnitt (21) des Spritzenzylinders (20)
• mit einer Axialöffnung (4) zum axialen Einsetzen des Befestigungsabschnittes (21) in eine Befestigungsposition,
• einer in der Aufnahme (3) angeordneten Abtasteinrichtung (6) mit mindestens einem von einer der Axialöffnung (4) zugewandten Basisfläche (52) der Abtasteinrichtung (6) vorstehenden Abtastmittel (37) zum Abtasten der mindestens einen Abtastfläche (23) eines in Befestigungsposition eingesetzten Befestigungsabschnittes (21),
• mindestens einem axialen Führungsmittel (7) zum Ausrichten der mindestens einen Ausrichtnase (26) in eine Winkelstellung bezüglich der Rotation um die Achse der Dosiervorrichtung, in der die Spritze (19) mit mindestens einer Abtastfläche (23) axial auf mindestens ein Abtastmittel (26) ausgerichtet ist,
• einem Aufnahmekörper (8) mit einer Kolbenaufnahme und einer weiteren Axialöffnung zum axialen Einschieben der Kolbenstange (31) in eine Befestigungsposition,
• Befestigungseinrichtungen (13) zum lösbaren Halten von Befestigungsabschnitt (21) und Kolbenstange (31) in ihren Befestigungspositionen in der Aufnahme (3) und in der Kolbenaufnahme und
• Kolbenstellcinrichtungen (10) zum Verschieben des Aufnahmekörpers (8),
**dadurch gekennzeichnet, dass**
• das axiale Führungsmittel (7) in der Aufnahme unterhalb der Abtasteinrichtung (6) vorhanden ist, wobei das Führungsmittel (7) an der der Axialöffnung (4) zugewandten Seite eine Führungskontur (44) hat,
• die mindestens eine Vertiefung (45) zur Aufnahme mindestens einer Ausrichtnase (26) bei Anordnung der Spritze (19) mit Befestigungsabschnitt (21) und Kolbenstange (31) in ihren Befestigungspositionen aufweist und
• die mindestens eine der Vertiefung (45) benachbarte Erhöhung (46) mit einem größeren Abstand Δh von der Basisfläche (52) der Abtasteinrichtung (6) als die mindestens eine Vertiefung (45) aufweist, wobei die Spritze (3) mit der mindestens einen Ausrichtnase (26) aus der mindestens einen Vertiefung (45) heraus auf die mindestens eine Erhöhung (46) verlagerbar ist.

2. Dosiervorrichtung nach Anspruch 1 bei der das mindestens eine axiale Führungsmittel (7) einen Führungssteg und/oder eine Führungsnut in axialer Richtung aufweist.

3. Dosiervorrichtung nach Anspruch 1 oder 2, bei der über den Umfang der Abtasteinrichtung (6) mehrere Abtastmittel (37) verteilt sind.

4. Dosiervorrichtung nach einem der Ansprüche 1 bis 3, bei der die Abtasteinrichtung (6) über mindestens ein axial entgegen der Einschieberichtung des Befestigungsabschnittes (21) wirksames Federmittel (41) in der Aufnahme (3) abgestützt ist.

5. Dosiervorrichtung nach Anspruch 4, bei der das Führungsmittel (7) mit der Abtasteinrichtung (6) verbunden und über das mindestens eine Federmittel (41) in der Aufnahme (3) abgestützt ist.

6. Dosiervorrichtung nach einem der Ansprüche 1 bis 5, bei der die Befestigungseinrichtungen (13) radial zustellbare Greifeinrichtungen zum Fixieren des Befestigungsabschnittes (21) und der Kolbenstange (31) in den Befestigungspositionen aufweisen.

7. Dosiervorrichtung nach einem der Ansprüche 1 bis 6, bei der das Führungsmittel (7) ringförmig ist und die Führungskontur (44) mehrere über den Umfang verteilte Vertiefungen (45) und dazwischen angeordnete Erhöhungen (46) aufweist.

8. Dosiervorrichtung nach einem der Ansprüche 1 bis 7, bei der die Anzahl der Vertiefungen (45) der Anzahl der Abtastmittel (37) entspricht.

9. Dosiervorrichtung nach einem der Ansprüche 7 oder 8, bei der die Führungskontur (44) des Führungsmittels (7) zwischen den Vertiefungen (45) und den Erhöhungen (46) allmählich ansteigt.

10. Dosiervorrichtung nach Anspruch 9, bei der die Übergänge zwischon den Vertiefungen (45) und Erhöhungen (46) rampenförmig und/oder gerundet sind.

11. Dosiervorrichtung nach einem der Ansprüche 1 bis 10, bei der sämtliche Vertiefungen (45) dasselbe Niveau bezüglich der Abtasteinrichtung (6) und/oder bei der sämtliche Erhöhungen (46) dasselbe Niveau bezüglich der Abtasteinrichtung (6) aufweisen.

12. Dosiervorrichtung nach einem der Ansprüche 1 bis 11 mit einer mit der Abtasteinrichtung (6) verbundenen Auswerteeinrichtung . (16) und/oder Anzeigeeinrichtung (17).

13. Dosiervorrichtung nach einem der Ansprüche 1 bis 12, bei der die Kolbenstelleinrichtungen (10) manuell und/oder motorgetrieben sind.

14. Dosiervorrichtung nach einem der Ansprüche 1 bis 13, die beim Dosieren mit der Hand gehalten werden kann.

15. Dosiervorrichtung nach einem der Ansprüche 1 bis 14, die eine stationäre Dosiervorrichtung ist.

16. Dosiervorrichtung nach einem der Ansprüche 1 bis 15, **dadurch gekennzeichnet, dass** der Befestigungsabschnitt des Spritzenzylinders der Spritze (19) ringförmig ist.

17. Dosiervorrichtung nach einem der Ansprüche 1 bis 16, **dadurch gekennzeichnet dass** es sich bei der Dosiervorrichtung um eine Pipette oder einen Dispenser handelt.

18. Dosiervorrichtung nach einem der Ansprüche 1 bis 17, **dadurch gekennzeichnet, dass** die Abtasteinrichtung (6) ringförmig ist.

19. Dosiervorrichtung nach einem der Ansprüche 1 bis 18, **dadurch gekennzeichnet, dass** die Abtastfläche (23) der Spritze eine ebene Fläche senkrecht zur Achse der Pipette aufweist, die gegenüber dieser Fläche örtliche Vertiefungen (24) nach unten aufweist, wobei durch die Abtastfläche (23) der Spritze nur dann ein ihr gegenüberliegendes Abtastmittel (37) der Dosiervorrichtung betätigt wird, wenn die Abtastfläche dort keine örtliche Vertiefungen (24) aufweist und die mindestens eine Ausrichtnase (26) der Spritze in einer Vertiefung (45) des Führungsmittels (7) aufgenommen ist.

20. Dosiervorrichtung nach einem der Ansprüche 1 bis 18, **dadurch gekennzeichnet, dass** die Abtastfläche (23) der Spritze eine ebene Fläche senkrecht zur Achse der Pipette aufweist, die gegenüber dieser Fläche örtliche Erhöhungen noch oben aufweist, wobei durch die Abtastfläche (23) der Spritze nur dann ein ihr gegenüberliegendes Abtastmittel (37) der Dosiervorrichtung betätigt wird, wenn die Abtastfläche dort eine örtliche Erhöhung aufweist und die mindestens eine Ausrichtnase (26) der Spritze in einer Vertiefung (45) des Führungsmittels (7) aufgenommen ist.

21. Dosiervorrichtung nach einem der Ansprüche 7 bis 20, **dadurch gekennzeichnet, dass** das ringförmige Führungsmittel (7) einen äußeren Ring mit einem Innendurchmesser R₁ aufweist, auf dem alleine die Führungskontur (44) mit den Vertiefungen (45) und Erhöhungen (46) angeordnet ist.

22. Dosiervorrichtung nach Anspruch 21, **dadurch gekennzeichnet, dass** die Abtastfläche (23) der Spritze und das mindestens eine Abtastmittel (37) innerhalb des äußeren Ringes angeordnet sind.

23. Dosiervorrichtung nach Anspruch 22, **dadurch gekennzeichnet, dass** die Abtastfläche (23) der Spritze und das mindestens eine Abtastmittel (37) ausschließlich innerhalb des äußeren Ringes angeordnet sind.

24. Dosiervorrichtung nach einem der Ansprüche 7 bis 23, **dadurch gekennzeichnet, dass** ringförmige Führungsmittel (7) zusätzlich Anlageelemente (51) aufweisen, die flächig an einer Basisfläche (52) der Abtasteinrichtung (53) anliegen.

25. Dosiervorrichtung nach Anspruch 24, **dadurch gekennzeichnet, dass** die Anlageelemente (51) des Führungsmittels (7) innerhalb des äußeren Rings mit einem Innendurchmesser R₁ liegen.

26. Dosiervorrichtung nach einem der Ansprüche 1 bis 25, **dadurch gekennzeichnet, dass** eine Spritze (19) nur dann durch die Befestigungseinrichtungen (13) aufgenommen wird, wenn mindestens eine Ausrichtnase (26) der Spritze (19) in der mindestens einen Vertiefung (45) des Führungsmittels (7) aufgenommen ist.

## Claims

1. A metering device for utilisation with a syringe (19), which features on a syringe cylinder (20) a fastening portion (21) with at least one axially directed sensing surface (23) projecting from the upside, and at least one alignment nose projecting from the outer perimeter of the fastening portion (21), and a plunger with a plunger rod comprising
• an accommodation (3) for the fastening portion (21) of the syringe cylinder (20)
• having an axial opening (4) for axially inserting the fastening portion (21) into a fastening position,
• a sensing device (6) disposed in the accommodation (3) with at least one sensing means (37) projecting from a basis surface (52) of the sensing device (6) facing the axial opening (4), for sensing the at least one sensing surface (23) of a fastening portion (21) inserted in a fastening position,
• at least one axial guiding means (7) for adjusting the at least one alignment nose (26) into an angular position with respect to rotation around the axis of the metering device, in which the syringe (19) is axially directed towards at least one sensing means (26) with at least one sensing surface (23),
• an accommodation body (8) with a plunger accommodation and a further axial opening for axially inserting the plunger rod (31) into a fastening position,
• fastening devices (13) for detachably holding fastening portion (21) and plunger rod (31) in their fastening positions in the accommodations (3) and in the plunger accommodation, and
• plunger adjustment devices (10) for shifting the accommodation body (8),
**characterised in that**
• the axial guiding means (7) is present in the accommodation below the sensing device (6), wherein the guiding means (7) has a guiding contour (44) on the side that faces the axial opening (4),
• said guiding contour (44) has at least one indentation (45) for receiving at least one alignment nose (26) when the syringe (19) is disposed with fastening portion (21) and plunger rod (31) being in their fastening positions, and
• the at least one raised part (46) neighbouring the indentation (45) has a distance from the basis surface (52) of the sensing device (6) greater about Δh than the at least one indentation (45), wherein the syringe (3) is adapted to be displaced with the at least one alignment nose (26) from out the at least one indentation (45) to the at least one raised part (46).

2. A metering device according to claim 1, wherein the at least one axial guiding means (7) has a guiding bridge and/or a guiding groove in the axial direction.

3. A metering device according to claim 1 or 2, wherein plural sensing means (37) are distributed over the perimeter of the sensing device (6).

4. A metering device according to any one of claims 1 to 3, wherein the sensing device (6) is supported in the accommodation by way of at least one spring means (41) acting axially against the displacement direction of the fastening portion (21).

5. A metering device according to claim 4, wherein the guiding means (7) is connected to the sensing device (6) and is supported in the accommodation (3) by way of the at least one spring means (41).

6. A metering device according to any one of claims 1 to 5, wherein the fastening means (13) have radially feedable gripping equipments for fixing the fastening portion (21) and the plunger rod (21) in the fastening positions.

7. A metering device according to any one of claims 1 to 6, wherein the guiding means (7) is annular and has the guiding contour (44) with several indentations (45) distributed over the perimeter and raised parts (46) disposed between them.

8. A metering device according to any one of claims 1 to 7, wherein the number of the indentations (45) corresponds to the number of the sensing means (37).

9. A metering device according to one of claims 7 or 8, wherein the guiding contour (44) of the guiding means (7) gradually ascends between the indentations (45) and the raised parts (46).

10. A metering device according to claim 9, wherein the transitions between the indentations (45) and the raised parts (46) are ramp-shaped and/or rounded.

11. A metering device according to any one of claims 1 to 10, wherein all the indentations (45) feature the same level with respect to the sensing device (6), and/or wherein all the raised parts (46) feature the same level with respect to the sensing device (6).

12. A metering device according to any one of claims 1 to 11, with an analysing unit (16) and/or display unit (17) connected to the sensing device (6).

13. A metering device according to any one of claims 1 to 12, wherein the plunger adjustment devices (10) are manually and/or motor driven.

14. A metering device according to any one of claims 1 to 13, which can be held by the hand when metering.

15. A metering device according to any one of claims 1 to 14, which is a stationary metering device.

16. A metering device according to any one of claims 1 to 15, **characterised in that** the fastening portion of the syringe cylinder of the syringe (19) is annular.

17. A metering device according to any one of claims 1 to 16, **characterised in that** the metering device is a pipette or a dispenser.

18. A metering device according to any one of claims 1 to 17, **characterised in that** the sensing device (6) is annular.

19. A metering device according to any one of claims 1 to 18, **characterised in that** the sensing surface (23) of the syringe features a flat surface vertical to the axis of the pipette, which has local indentations (24) with respect to this surface towards the downside, wherein a sensing means (37) of the metering device is actuated by the sensing surface (23) of the syringe opposite to it only then when the sensing surface does not have any local indentations (24) there and the at least one alignment nose (26) of the syringe is received in an indentation (45) of the guiding means (7).

20. A metering device according to any one of claims 1 to 18, **characterised in that** the sensing surface (23) of the syringe features a flat surface vertical to the axis of the pipette, which has local raised parts raised against this surface towards the upside, wherein a sensing means (37) of the metering device opposite to the sensing surface is actuated by the sensing surface (23) of the syringe only then when the sensing surface has a local raised part there and the at least one alignment nose (26) of the syringe is accommodated in an indentation (45) of the guiding means (7).

21. A metering device according to any one of claims 7 to 20, **characterised in that** the annular guiding means (7) has an outer ring with an inside diameter R₁, on which is disposed solely the guiding contour (44) with the indentations (45) and raised parts (46).

22. A metering device according to claim 21, **characterised in that** the sensing surface (23) of the syringe and the at least one sensing means (37) are disposed within the outer ring.

23. A metering device according to claim 22, **characterised in that** the sensing surface (23) of the syringe and the at least one sensing means (37) are disposed exclusively within the outer ring.

24. A metering device according to any one of claims 7 to 23, **characterised in that** annular guiding means (7) have abutment elements (51) in addition, which bear two-dimensionally against a basis surface (52) of the sensing device (53).

25. A metering device according to claim 24, **characterised in that** the abutment elements (51) of the guiding means (7) are located within the outer ring having an inside diameter R₁.

26. A metering device according to any one of claims 1 to 25, **characterised in that** a syringe (19) is received by the fastening devices (13) only then when at least one alignment nose (26) of the syringe (19) is received in the at least one indentation (45) of the guiding means (7).

## Revendications

1. Dispositif de dosage pour l'utilisation avec une seringue (19) qui présente sur un cylindre de seringue (20) un segment de fixation (21) avec au moins une surface de palpage (23) dirigée axialement et dépassant du côté supérieur et avec au moins un bec d'orientation dépassant du périmètre extérieur du segment de fixation (21), et un piston avec une tige de piston, avec
• un logement (3) pour le segment de fixation (21) du cylindre de seringue (20)
• avec une ouverture axiale (4) pour l'insertion axiale du segment de fixation (21) dans une position de fixation,
• un dispositif de palpage (6) disposé dans le logement (3), avec au moins un moyen de palpage (37), dépassant d'une surface de base (52) du dispositif de palpage (6) tournée vers l'ouverture axiale (4), et destiné au palpage de la surface de palpage (23) au moins au nombre de un d'un segment de fixation (21) inséré en position de fixation,
• au moins un moyen de guidage (7) axial pour l'orientation du bec d'orientation (26) au moins au nombre de un dans une position angulaire par rapport à la rotation autour tour de l'axe du dispositif de dosage, dans laquelle la seringue (19) avec au moins une surface de palpage (23) est orientée axialement vers au moins un moyen de palpage (26),
• un corps de logement (8) avec un logement de piston et une autre ouverture axiale pour l'insertion axiale de la tige de piston (31) dans une position de fixation,
• des dispositifs de fixation (13) pour la retenue amovible du segment de fixation (21) et de la tige de piston (31) dans leurs positions de fixation dans le logement (3) et dans le logement de piston et
• des dispositifs d'actionnement de piston (10) pour le coulissement du corps de logement (8),
**caractérisé en ce que**
• le moyen de guidage (7) axial est présent dans le logement sous le dispositif de palpage (6), le moyen de guidage (7) ayant un contour de guidage (44) sur le côté tourné vers l'ouverture axiale (4),
• qui présente au moins un creux (45) destiné à recevoir au moins un bec d'orientation (26) lors de la disposition de la seringue (19) avec le segment de fixation (21) et la tige de piston (31) dans leurs positions de fixation et
• qui présente au moins une surélévation (46) voisine du creux (45) avec une distance Δh plus grande à la surface de base (52) du dispositif de palpage (6) que le creux (45) au moins au nombre de un, la seringue (3) avec le bec d'orientation (26) au moins au nombre de un pouvant être déplacée à partir du creux (45) au moins au nombre de un vers la surélévation (46) au moins au nombre de un.

2. Dispositif de dosage selon la revendication 1, dans lequel le moyen de guidage (7) axial au moins au nombre de un présente une nervure de guidage et/ou une rainure de guidage dans la direction axiale.

3. Dispositif de dosage selon la revendication 1 ou 2, dans lequel plusieurs moyens de palpage (37) sont répartis sur le périmètre du dispositif de palpage (6).

4. Dispositif de dosage selon l'une des revendications 1 à 3, dans lequel le dispositif de palpage (6) est supporté dans le logement (3) par le bais d'au moins un moyen de ressort (41) agissant axialement à l'opposé de la direction d'insertion du segment de fixation (21).

5. Dispositif de dosage selon la revendication 4, dans lequel le moyen de guidage (7) est raccordé au dispositif de palpage (6) et est supporté dans le logement (3) par le biais du moyen de ressort (41) au moins au nombre de un.

6. Dispositif de dosage selon l'une des revendications 1 à 5, dans lequel les dispositifs de fixation (13) présentent des dispositifs d'agrippement pouvant être réglés radialement pour la fixation du segment de fixation (21) et de la tige de piston (31) dans les positions de fixation.

7. Dispositif de dosage selon l'une des revendications 1 à 6, dans lequel le moyen de guidage (7) est de forme annulaire et le contour de guidage (44) présente plusieurs creux (45) répartis sur le périmètre et des surélévations (46) disposées en position intermédiaire.

8. Dispositif de dosage selon l'une des revendications 1 à 7, dans lequel le nombre de creux (45) correspond au nombre de moyens de palpage (37).

9. Dispositif de dosage selon l'une des revendications 7 ou 8, dans lequel le contour de guidage (44) du moyen de guidage (7) augmente progressivement entre les creux (45) et les surélévations (46).

10. Dispositif de dosage selon la revendication 9, dans lequel les transitions entre les creux (45) et les surélévations (46) sont en forme de rampe et/ou arrondies.

11. Dispositif de dosage selon l'une des revendications 1 à 10, dans lequel tous les creux (45) présentent le même niveau par rapport au dispositif de palpage (6) et/ou dans lequel toutes les surélévations (46) présentent le même niveau par rapport au dispositif de palpage (6).

12. Dispositif de dosage selon l'une des revendications 1 à 11, avec un dispositif d'analyse (16) et/ou un dispositif d'affichage (17) raccordé au dispositif de palpage (6).

13. Dispositif de dosage selon l'une des revendications 1 à 12, dans lequel les dispositifs d'actionnement de piston (10) sont entraînés manuellement et/ou par moteur.

14. Dispositif de dosage selon l'une des revendications 1 à 13, qui peut être tenu à la main lors du dosage.

15. Dispositif de dosage selon l'une des revendications 1 à 14, qui est un dispositif de dosage stationnaire.

16. Dispositif de dosage selon l'une des revendications 1 à 15, **caractérisé en ce que** le segment de fixation du cylindre de seringue de la seringue (19) est de forme annulaire.

17. Dispositif de dosage selon l'une des revendications 1 à 16, **caractérisé en ce que**, concernant le dispositif de dosage, il s'agit d'une pipette ou d'un distributeur.

18. Dispositif de dosage selon l'une des revendications 1 à 17, **caractérisé en ce que** le dispositif de palpage (6) est de forme annulaire.

19. Dispositif de dosage selon l'une des revendications 1 à 18, **caractérisé en ce que** la surface de palpage (23) de la seringue présente une surface plane perpendiculairement à l'axe de la pipette qui présente vis-à-vis de cette surface des creux (24) locaux vers le bas, la surface de palpage (23) de la seringue n'actionnant un moyen de palpage (37) du dispositif de dosage qui lui est opposé que quand la surface de palpage ne présente à cet endroit aucun creux (24) local et quand le bec d'orientation (26) de la seringue au moins au nombre de un est reçu dans un creux (45) du moyen de guidage (7).

20. Dispositif de dosage selon l'une des revendications 1 à 18, **caractérisé en ce que** la surface de palpage (23) de la seringue présente une surface plane perpendiculairement à l'axe de la pipette qui présente vis-à-vis de cette surface des surélévations locales vers le haut, la surface de palpage (23) de la seringue n'actionnant un moyen de palpage (37) du dispositif de dosage qui lui est opposé que quand la surface de palpage présente à cet endroit une surélévation locale et quand le bec d'orientation (26) de la seringue au moins au nombre de un est reçu dans un creux (45) du moyen de guidage (7).

21. Dispositif de dosage selon l'une des revendications 7 à 20, **caractérisé en ce que** le moyen de guidage (7) de forme annulaire présente un anneau extérieur avec un diamètre intérieur R₁ sur lequel est disposé seulement le contour de guidage (44) avec les creux (45) et les surélévations (46).

22. Dispositif de dosage selon la revendication 21, **caractérisé en ce que** la surface de palpage (23) de la seringue et le moyen de palpage (37) au moins au nombre de un sont disposés à l'intérieur de l'anneau extérieur.

23. Dispositif de dosage selon la revendication 22, **caractérisé en ce que** la surface de palpage (23) de la seringue et le moyen de palpage (37) au moins au nombre de un sont disposés exclusivement à l'intérieur de l'anneau extérieur.

24. Dispositif de dosage selon l'une des revendications 7 à 23, **caractérisé en ce que** des moyens de guidage (7) de forme annulaire présentent en plus des éléments d'appui (51) qui sont adjacents sur toute leur surface à une surface de base (52) du dispositif de palpage (53).

25. Dispositif de dosage selon la revendication 24, **caractérisé en ce que** les éléments d'appui (51) du moyen de guidage (7) sont situés à l'intérieur de l'anneau extérieur avec un diamètre intérieur R₁.

26. Dispositif de dosage selon l'une des revendications 1 à 25, **caractérisé en ce qu'**une seringue (19) n'est reçue par les dispositifs de fixation (13) que si au moins un bec d'orientation (26) de la seringue (19) est reçu dans le creux (45) au moins au nombre de un du moyen de guidage (7).
